**Europäisches Patentamt**

**European Patent Office**

**Office européen des brevets**

(11) Publication number: **0 153 193**
**B1**

(12) **EUROPEAN PATENT SPECIFICATION**

(45) Date of publication of patent specification: **23.05.90**

(21) Application number: **85301130.2**

(22) Date of filing: **20.02.85**

(51) Int. Cl.⁵: **C 08 K 9/04,** C 09 C 3/08,
C 08 L 27/06, C 08 L 67/08 //
(C08K9/04, 5:09)

(54) Coated particulate fillers.

(30) Priority: **21.02.84 GB 8404569**

(43) Date of publication of application:
**28.08.85 Bulletin 85/35**

(45) Publication of the grant of the patent:
**23.05.90 Bulletin 90/21**

(84) Designated Contracting States:
**AT BE CH DE FR IT LI LU NL SE**

(56) References cited:
**US-A-3 803 065**
**US-A-4 191 670**

(73) Proprietor: **BLUE CIRCLE INDUSTRIES PLC**
**Portland House Stag Place**
**London SW1E 5BJ (GB)**

(72) Inventor: **Wright, Peter John**
**101 Ballens Road**
**Lordswood Chatham Kent, ME5 8PD (GB)**

(74) Representative: **Grundy, Derek George Ritchie**
**et al**
**CARPMAELS & RANSFORD 43, Bloomsbury**
**Square**
**London WC1A 2RA (GB)**

The file contains technical information
submitted after the application was filed and
not included in this specification

## Description

The present invention relates to coated particulate fillers, to a process for their production and to compositions comprising an organic polymer and such a filler.

Inert particulate fillers are frequently mixed with polymers, for example unsaturated polyester resins, in order to reduce the cost of the product and to reduce shrinkage where the polymer is for use in a moulding composition. It has been found to be undesirable to put a surface coating onto such fillers to reduce the increase in viscosity that generally occurs when fillers are mixed with synthetic resins. Such a surface coating may also act to increase the stability of the filler-in-resin dispersion and to prevent separation and settling of the filler. A conventional treatment involves coating the mineral filler particles with stearic acid (usually in an industrial grade containing only about 50% by weight of the $C_{18}$ acid) at a rate of from 1 to 2% by weight on the filler.

There is still a need, however, for a further reduction in the viscosity of filler/polymer compositions. For example, in the "spray-up" process for the manufacture of glass-fibre reinforced polyester compositions the polyester/filler mixture must pass through a spray gun and it is generally true that the lower the viscosity of the mixture the better will be the spray and roll-out characteristics thereof. The spray-up method is used, for example, in the production of bath-tubs by spraying a polyester/glass fibre composition onto a thermoformed shell of acrylic resin, any glass fibres that project from the sprayed-on coating then being forced back into the polyester mass by a "roll-out" operation.

There is also a need for fillers that can be readily blended with such polymers as polyvinyl chloride to give fusion times that are shorter than those obtained with conventional fillers.

US—A—3,803,065 discloses the modification of a fresh surface of an inorganic powder by applying a modifier selected from fatty acids, metal salts of fatty acids, aliphatic alcohols, aliphatic amides and aliphatic amines. The fatty acids and fatty acid salts have 10 to 24 carbon atoms, for example palmitic, stearic or erucic acid. Although the inorganic powder may be treated with an aqueous solution or a solvent solution of the modifier, there is no disclosure or suggestion that the fatty acid may be applied in the presence of both water and an alcohol. The modified inorganic material may be employed in polyolefin resin compositions having a high transparency and antiblocking properties.

US—A—4,191,670 discloses certain surface-treated mineral fillers which are suitable for use in the preparation of emulsion paints. The mineral fillers are surface-treated using a mixture of saturated aliphatic carboxylic acids and unsaturated aliphatic carboxylic acids, the acids generally having from 6 to 22 carbon atoms, preferably from 12 to 20 carbon atoms. This reference is not concerned with, and offers no solution to, the problems of reducing the viscosity and the fusion times of filled polymer compositions.

The present invention now provides a particulate filler that comprises filler particles to the surface of which there is chemically bonded an aliphatic carboxylic acid having eight carbon atoms in its molecule. (The particulate fillers of this invention are also referred to herein as "coated" fillers. However, this is not meant to imply that the particles are necessarily entirely covered with a layer of the aliphatic carboxylic acid, nor that the layer is necessarily of uniform thickness).

The present invention also provides a process for the production of a particulate filler which comprises chemically bonding to the surface of filler particles an aliphatic carboxylic acid having eight carbon atoms in its molecule, said acid being applied in the presence of water and an alcohol.

The present invention further provides a polymer composition comprising a matrix of an organic polymer having distributed therein a particulate filler according to this invention.

Any filler may be used in the present invention, provided that it has a surface to which the aliphatic carboxylic acid may be bound: fillers having an acid-reactive surface are especially preferred. The fillers are, in general, mineral fillers, which may be synthetically prepared or of natural origin. Suitable fillers may be selected from the oxides, hydroxides, carbonates and silicates of alkaline earth metals, titanium, silicon, aluminium and zinc.

A particularly preferred filler is calcium carbonate in any of its various forms, in particular chalk whiting, ground limestome or ground calcite. Precipitated calcium carbonate may also be used. Other useful fillers include aluminium hydroxide ($Al(OH)_3$), which is commonly referred to as "aluminium trihydrate" or "ATH", wollastonite (a form of calcium silicate), magnesium carbonate and barium carbonate.

Although, the particles may have any suitable size and morphology, it is preferred for many applications that they should be irregularly shaped and have a median particle size of from 2 to 20 μm.

It is, of course, possible to employ a mixture of minerals as the filler component.

It is preferred that the $C_8$ aliphatic carboxylic acid applied to the filler surfaces be straight-chained and that it be saturated. The preferred acid, n-octanoic acid, can be obtained in quite good purity (a purity of 95% is adequate), for example from the firm of Akzo Chemie.

These coating materials are generally employed in the form of the free acid, rather than in the form of their salts.

It is important in resin-based systems to avoid the migration of free acid from the filler surface, since this may interfere with the surface properties of the moulded article. It is therefore necessary to employ a coating technique in which all, or virtually all, of the acid is chemically bonded to the surface of the filler. Thus, for example, in the case of a chalk whiting, it is necessary to achieve complete or nearly complete

EP 0 153 193 B1

conversion of the acid in the coating into the calcium salt. In order to obtain a satisfactory coated filler using a $C_8$ aliphatic carboxylic acid, in accordance with the present invention, it appears to be essential to apply the acid in the presence of both water and an alcohol. As discussed in greater detail below, the applicant's research has indicated that satisfactory results are not obtained if the acid is applied either alone or in the presence of only an alcohol. Furthermore, attempts to apply the fatty acids in a manner analogous to the methods used for applying coatings of stearic acid did not give good results; this is surprising, for stearic acid is solid whereas the fatty acids preferred herein are liquid and might therefore be expected to be amenable to conventional coating techniques.

The use of low-boiling alcohols is preferred; excess alcohol has to be removed from the coated particles and a high-boiling alcohol would require a correspondingly high temperature for its removal by evaporation, with the consequent risk of yellowing or charring of the organic coating. The preferred alcohols include tert.-butyl alcohol, propan-1-ol, propan-2-ol, ethanol and methanol, the last-mentioned being especially preferred. In addition to having low boiling points, these preferred alcohols are all readily miscible with water. A mixture of alcohols can, of course, be used.

The quantity of alcohol used should be sufficient to dissolve the acid completely to give a clear mixture free of any precipitate. However, it is clearly desirable to use, as far as possible, the minimum serviceable quantity of alcohol, since excess alcohol has to be removed after the coating operation.

Preferably, from 0.5 to 2 parts by weight of water are employed per part by weight of alcohol. It is also preferred to employ from 0.5 to 2 parts by weight of the alcohol/water mixture per part by weight of aliphatic carboxylic acid. It must be mentioned that within these preferred ratios, certain combinations may be encountered which are impractical due to insolubility problems. However, such impractical combinations would come to light in preliminary trials and an appropriate adjustment may then readily be effected.

A typical preferred weight ratio of carboxylic acid:alcohol:water is 1:0.26:0.33. Using a ratio of this order and a preferred coating technique (such as that described below in Example 1), then the uncombined acid in the coating on the filler may be as low as 0.7 to 2% of the acid used. In contrast, experiments have shown that if the acid is added either in the absence of water and alcohol or in the presence of methanol alone, the uncombined acid in the coating may be as much as 15 to 30% of the acid used.

Although it is possible to add the acid in admixture with both the alcohol and the water, the preferred procedure comprises adding the water first to the filler, mixing these components and raising the temperature to, say, 50°C, adding the acid and the alcohol (preferably as a pre-formed mixture) to the mixture of filler and water, and then mixing thoroughly to ensure a good dispersion of the acid over the filler-particle surfaces. The excess water and alcohol are then removed, conveniently by evaporation, and the residual coated filler is cooled, whereupon it is suitable for collection, bagging and transporting.

Preferably, the amount of carboxylic acid in the coating will be from 0.25 to 3.0% by weight of the filler; in many applications, an amount of carboxylic acid of up to 2% by weight of the filler will be satisfactory.

The coated fillers of the present invention can be incorporated into a wide variety of organic polymers in order to form composites. When the matrix of the composite is selected from unsaturated polyester resins, for example such resins that are liquid at room temperature (15—20°C) up to the polymerisation temperature (typically 70°C), it has been found that the coated fillers do not cause a large increase in viscosity and the resultant filler/resin composites are particularly advantageous in manufacturing processes which require the composite to be sprayed.

The coated fillers of this invention are also useful in polyester dough-moulding compounds, which are used in injection or compression dough-moulding machines. The filler imparts dimensional stability to the moulded composition and helps to prevent undue shrinkage and warping as well as moderating the exotherm. Such composites, owing to their good heat-resistance properties, may be used, for example, in the covers of sandwich toasters.

The present coated fillers also find application in other resins, for example polyvinyl chloride (PVC) resins.

The coated fillers of the present invention can be distributed in the polymer matrix by methods customary in the art. In general, from 5 to 150 parts by weight of filler will be employed per 100 parts by weight of the matrix polymer. Typically, the amount of filler will be 5—20 pphr (parts per hundred parts of resin, by weight) in rigid PVC, 50—100 pphr in flexible PVC and 30—150 pphr in unsaturated polyester resins. In a number of applications (especially in dough-moulding applications, which do not require the use of a spray gun or nozzle) the amount of filler may be even higher, for example up to 300 parts per 100 parts of polymer.

The present invention is illustrated in and by the following specific Examples.

Example 1

One litre of water was added to 200 kg of chalk whiting (2.7 μm median diameter) contained in a 630 litre high-speed mixer operated at slow speed, during which addition the temperature rose to 50°C, and then 3 kg of n-octanoic acid mixed with 780 ml of methanol were run into the mixer. The temperature of the mixture was allowed to rise to 110°C (this rise in temperature being due solely to the energy of the mixing process) and was maintained there for a brief period in order to permit the water and the methanol to evaporate off. The coated whiting filler remaining in the mixture was then discharged into a cooler.

3

The level of free acid in the coating was determined to be 0.2% by weight of the filler, whereas the level of combined acid (i.e. the acid that was chemically bonded to the filler surface) amounted to 1.45% by weight of the filler. The viscosity of a 1:1 mixture (by weight) of the coated filler and the polyester "Crystic 196" (from Messrs. Scott Bader) was 1842 cP.

Example 2

Using a procedure analogous to that described in Example 1, a chalk whiting filler (Snowcal 7ML produced by Blue Circle Industries PLC), having a weight median particle diameter of 2.7 μm, was coated with various quantities of n-octanoic and, for the purposes of comparison, n-decanoic acid and stearic acid, using coating levels of from 0.25 to 3% by weight of the filler.

Examination of this wide range of coating levels was necessary, for the optimum coating level had to be determined for each particular resin/filler combination. The resin used in these experiments was the unsaturated polyester resin Crystic 196, this being a general purpose resin suitable for use in hand lay-up or machine moulding applications. The viscosities of the coated fillers mixed with the Crystic 196 resin at a ratio of 1:1 by weight were measured using a rotating cylinder viscometer with a shear rate of 0 to 112 sec$^{-1}$. The minimum viscosity was found to occur at a coating level of 1.5% by weight for the n-octanoic and n-decanoic acid treatment and at 1.0% for the stearic acid treatment. Both the n-octanoic acid and n-decanoic acid treatments gave viscosities of the filler/resin mixture which was 25% below that of the mixture containing the filler treated with stearic acid and 48% below that of the uncoated filler, as shown in the following table:

TABLE 1

| | |
|---|---|
| Uncoated Snowcal 7ML/polyester mix | 3,150 cps |
| n-decanoic acid coated Snowcal 7ML/polyester | 1,500 cps |
| n-octanoic acid coated Snowcal 7ML/polyester | 1,500 cps |
| Stearic acid coated Snowcal 7ML/polyester | 2,000 cps |

Example 3

Experiments similar to those described in Example 2 were carried out using a calcium carbonate filler having a weight median particle diameter of 16 μm (Calcite T30 from Blue Circle Industries PLC). The resin used in these experiments was the unsaturated polyester resin "Stypol" (from Messrs. Freeman), this being a typical resin for use in dough moulding compounds.

Using 150 parts by weight of filler per 100 parts by weight of the polyester resin, the minimum viscosity was found to occur at a coating level of 0.75% by weight of the filler using n-octanoic acid, compared with 0.50% using n-decanoic acid and 0.5% for stearic acid.

In these experiments the reduction in viscosity achieved with the use of the n-octanoic acid coated filler was 50% greater than that achieved using stearic acid coated filler and 63% below the viscosity of a mixture of polyester resin with uncoated filler. The use of the decanoic acid decreased the viscosity of the mixture by 10% compared with stearic acid. The results are summarised in the following table:

TABLE 2

| | |
|---|---|
| Uncoated Calcite T30/polyester | 14000 cps |
| n-decanoic acid coated Calcite T30/polyester | 9500 cps |
| n-octanoic acid coated Calcite T30/polyester | 5180 cps |
| Stearic acid coated Calcite T30/polyester | 10360 cps |

Example 4

To evaluate further the performance of the coated fillers of the present invention, samples of coated fillers prepared as described above in Examples 2 and 3 were subjected to the following tests.

The ability of the surface coatings to reduce the absorption of organic materials by the fillers was measured using a technique based on torque rheometry described in "The Journal of Paint Technology" Vol. 46, No. 591, April 1974, pp. 44—50. The liquid used for these determinations was di-octyl phthalate (DOP), more correctly termed bis-(2-ethylhexyl phthalate).

The apparent density after compaction was measured according to British Standard BS 1460:1967, and bulk density was measured according to BS 2782:Part 6:Method 621A. Both of these tests measure the degree of lubrication between particles.

The results are summarised in the following table:

## TABLE 3

|  | Absorption of DOP (ml/100 g) | Density after compaction | Bulk density (g/ml) |
|---|---|---|---|
| Uncoated Snowcal 7ML | 24.30 | 1.06 | 0.60 |
| 1.5% by weight n-octanoic acid coated Snowcal 7ML | 11.45 | 1.19 | 0.85 |
| 1.5% by weight n-decanoic acid coated Snowcal 7ML | 12.08 | 1.09 | 0.82 |
| 1.0% by weight stearic acid coated Snowcal 7ML | 12.40 | 1.03 | 0.76 |
| Uncoated Calcite T30 | 17.60 | 1.42 | 0.82 |
| 0.75% by weight n-octanoic acid coated Calcite T30 | 10.90 | 1.76 | 1.16 |
| 0.5% by weight n-decanoic acid coated Calcite T30 | 10.90 | 1.70 | 1.10 |
| 0.5% by weight stearic acid coated Calcite T30 | 11.30 | 1.67 | 1.03 |

The above results indicate that the $C_8$ acid according to the invention performs slightly better than the $C_{10}$ acid, both of these, however, being clearly superior to the $C_{18}$ acid (stearic acid) known from the prior art.

In further experiments, a series of mixtures each comprising a coated filler and a polyester resin at a weight ratio of 1:1, using whiting fillers coated, respectively, with a $C_4$, $C_6$, $C_8$, $C_{10}$, $C_{12}$, $C_{14}$, $C_{18}$ or $C_{20}$ saturated, straight-chain fatty acid and using the resins Crystic 196 and "Uralam" (from Messrs. Uralite). The viscosity of each mixture was measured using a rotating viscometer and it was found that the viscosity decreased with decreasing chain length of the fatty acid reaching a minimum value with the $C_8$ acid according to the invention, after which the viscosity values increased with decreasing chain length. Fatty acids having a chain length greater than 10 carbon atoms appear to offer but little advantage over the stearic acid conventionally used, whereas the short-chain fatty acids give unsatisfactory coatings (possibly due to their very high reactivity).

### Example 5

A number of resin/filler blends were prepared that had the following formulation: 100 parts by weight of unplasticized PVC (Breon S110 from B.P. Chemicals), 2.5 parts of a stabilizer/lubricant (Interstab L3651F from Akzo Chemie) and either 15 or 25 parts of filler.

The filler was a chalk whiting (Snowcal 7ML), uncoated or coated either with stearic acid or with n-octanoic acid in accordance with this invention.

For each blending operation, the fusion time was ascertained and the torque response curves were obtained using a Haake Rheocord EU10 apparatus fitted with a Haake Rheomix 600 internal mixer.

The uncoated Snowcal 7ML was difficult to disperse in the resin and was found to retard fusion. Coating the Snowcal 7ML with stearic acid was found to decrease the fusion time, giving a minimum value when 2% w/w of the coating agent was employed. Coating the Snowcal 7ML with n-octanoic acid was found to give a greater reduction in fusion time at coating levels of from 0.5 to 4% w/w.

The following table records results that were obtained in these tests.

TABLE 4

| Filler | Loading | | | |
|---|---|---|---|---|
| | 15 p.p.h.r. | | 25 p.p.h.r. | |
| | Fusion time (min) | Torque (M-g) | Fusion time (min) | Torque (M-g) |
| Uncoated Snowcal 7ML | 10.0 | 1550 | 12.0 | 1550 |
| 7ML+2% stearic acid | 5.6 | 1650 | 4.5 | 1750 |
| 7ML+2% n-octanoic acid | 3.2 | 2102 | 2.8 | 2300 |
| 7ML+1% n-octanoic acid | 4.2 | 1947 | 4.3 | 2063 |

The results indicate that by coating the filler in accordance with the present invention it is possible to obtain a substantial reduction in the fusion time of the resin blend without incurring an unacceptable rise in fusion torque. Moreover, the present invention allowed the filler loading to be increased without an unacceptable increase in fusion time. It has also been found that when employing the present fillers with flexible PVC and with other resins (cf. Table 3 in Example 4), it is possible to obtain the desired characteristics, e.g. softness, using less DOP than would otherwise be required. With rigid PVC, the present fillers give better mixing and dispersion and can therefore improve the rate of fusion.

The words "Crystic", "Snowcal", "Stypol", "Uralam", "Breon", "Interstab", "Rheocord" and "Rheomix" are believed to be Registered Trade Marks.

**Claims**

1. A particulate filler that comprises filler particles to the surface of which there is chemically bonded an aliphatic carboxylic acid having 8 carbon atoms in its molecule.

2. A filler according to claim 1, characterised in that the filler particles are of a mineral selected from the oxides, hydroxides, carbonates and silicates of the alkaline earth metals, titanium, silicon, aluminium and zinc.

3. A filler according to claim 2, characterised in that the filler particles are of calcium carbonate.

4. A filler according to claim 1, 2 or 3, characterised in that the aliphatic carboxylic acid is n-octanoic acid.

5. A process for the production of a particulate filler which comprises chemically bonding to the surface of filler particles an aliphatic carboxylic acid, characterised in that the said acid has 8 carbon atoms in its molecule and in that the said acid is applied in the presence of water and an alcohol.

6. A process according to claim 5, characterised in that the alcohol is selected from methanol, ethanol, propan-1-ol, propan-2-ol and tert-butyl alcohol.

7. A process according to claim 5 or 6, characterised in that 0.5 to 2 parts by weight of water are employed per part by weight of alcohol.

8. A process according to claim 5, 6 or 7, characterised in that 0.5 to 2 parts by total weight of alcohol and water are employed per part by weight of aliphatic carboxylic acid.

9. A process according to any one of claims 5 to 8, characterised in that the aliphatic carboxylic acid is applied to the filler particles in an amount of from 0.25 to 3.0% by weight of the filler.

10. A process according to any one of claims 5 to 9, characterised in that water is added to the filler particles and the aliphatic carboxylic acid is subsequently added in admixture with the alcohol.

11. A process according to any one of claims 5 to 10, characterised in that after the aliphatic carboxylic acid has been applied to the filler particles, the excess water and alcohol is removed by evaporation.

12. A process according to any one of claims 6 to 11, characterised in that the filler particles are as defined in claim 2 or 3.

13. A process according to any one of claims 6 to 12, characterised in that the said acid is n-octanoic acid.

14. A polymer composition comprising a matrix of an organic polymer having distributed therein a particulate filler according to any one of claims 1 to 4 or a particulate filler prepared by a process according to any of claims 5 to 13.

15. A polymer composition according to claim 14, characterised in that the matrix comprises an unsaturated polyester resin or polyvinyl chloride.

16. A polymer composition according to claim 14 or 15, characterised in that from 5 to 300 parts by weight of filler are present per 100 parts by weight of the matrix polymer.

# EP 0 153 193 B1

## Patentansprüche

1. Teilchenförmiger Füllstoff, dadurch gekennzeichnet, daß er Füllstoffteilchen aufweist, an deren Oberfläche chemisch eine aliphatische Carbonsäure mit 8 Kohlenstoffatomen im Molekül gebunden ist.

2. Füllstoff nach Anspruch 1, dadurch gekennzeichnet, daß die Füllstoffteilchen aus einem Mineral und aus der Gruppe der Oxide, Hydroxide, Carbonate und Silikate von Erdalkalimetallen, Titan, Silicium, Aluminium und Zink gewählt sind.

3. Füllstoff nach Anspruch 2, dadurch gekennzeichnet, daß die Füllstoffteilchen aus Calciumcarbonat sind.

4. Füllstoff nach Anspruch 1, 2 oder 3, dadurch gekennzeichnet, daß die aliphatische Carbonsäure n-Octansäure ist.

5. Verfahren zur Herstellung eines teilchenförmigen Füllstoffs, wobei man chemisch an die Oberfläche von Füllstoffteilchen eine aliphatische Carbonsäure bindet, dadurch gekennzeichnet, daß die Säure 8 Kohlenstoffatome im Molekül hat und daß diese Säure in Gegenwart von Wasser und einem Alkohol aufgebracht wird.

6. Verfahren nach Anspruch 5, dadurch gekennzeichnet, daß der Alkohol aus der Gruppe Methanol, Ethanol oder Propan-1-ol, Propan-2-ol und tert-Butylalkohol gewählt wird.

7. Verfahren nach Anspruch 5 oder 6, dadurch gekennzeichnet, daß 0,5 bis 2 Gew.-Teile Wasser pro Gew.-Teil Alkohol verwendet werden.

8. Verfahren nach Anspruch 5, 6 oder 7, dadurch gekennzeichnet, daß 0,5 bis 2 Gew.-Teile an Gesamtgewicht von Alkohol und Wasser pro Gew.-Teil aliphatischer Carbonsäure verwendet werden.

9. Verfahren nach einem der Ansprüche 5 bis 8, dadurch gekennzeichnet, daß die aliphatische Carbonsäure auf die Füllstoffteilchen in einer Menge von 0,25 bis 3,0 Gew.-% des Füllstoffes aufgebracht wird.

10. Verfahren nach einem der Ansprüche 5 bis 9, dadurch gekennzeichnet, daß Wasser zu den Füllstoffteilchen zugesetzt und dann die aliphatische Carbonsäure in Mischung mit dem Alkohol zugesetzt wird.

11. Verfahren nach einem der Ansprüche 5 bis 10, dadurch gekennzeichnet, daß nach Aufbringen der aliphatischen Carbonsäure auf die Füllstoffteilchen der Überschuß von Wasser und Alkohol durch Verdampfen entfernt wird.

12. Verfahren nach einem der Ansprüche 6 bis 11, dadurch gekennzeichnet, daß die Füllstoffteilchen die in Anspruch 2 oder 3 definierten sind.

13. Verfahren nach einem der Ansprüche 6 bis 12, dadurch gekennzeichnet, daß die Säure n-Octansäure ist.

14. Polymerzusammensetzung enthaltend eine Matrix eines organischen Polymeren, das einen teilchenförmigen Füllstoff gemäß einem der Ansprüche 1 bis 4 oder einen teilchenförmigen Füllstoff, hergestellt nach einem Verfahren gemäß einem der Ansprüche 5 bis 13 darin verteilt enthält.

15. Polymerzusammensetzung nach Anspruch 14, dadurch gekennzeichnet, daß die Matrix ein ungesättigtes Polyesterharz oder Polyvinylchlorid enthält.

16. Polymerzusammensetzung nach Anspruch 14 oder 15, dadurch gekennzeichnet, daß 5 bis 300 Gew.-Teile Füllstoff pro 100 Gew.-Teile Matrixpolymeres vorliegen.

## Revendications

1. Charge particulaire, comprenant des particules de charge à la surface desquelles est lié chimiquement un acide carboxylique aliphatique dont la molécule comporte 8 atomes de carbone.

2. Charge selon la revendication 1, caractérisée en ce que les particules de charge sont faites d'un composé minéral sélectionné parmi les oxydes, hydroxydes, carbonates et silicates des métaux alcalino-terreux, du titane, du silicium, de l'aluminium et du zinc.

3. Charge selon la revendication 2, caractérisée en ce que les particules de charge sont en carbonate de calcium.

4. Charge selon la revendication 1, 2 ou 3, caractérisée en ce que l'acide carboxylique aliphatique est l'acide n-octanoïque.

5. Procédé de production d'une charge particulaire, comprenant le fait de lier chimiquement un acide carboxylique aliphatique à la surface de particules de charge, caractérisé en ce que la molécule dudit acide comporte 8 atomes de carbone et en ce qu'on applique ledit acide en présence d'eau et d'un alcool.

6. Procédé selon la revendication 5, caractérisé en ce que l'alcool est choisi parmi le méthanol, l'éthanol, le propanol-1, le propanol-2 et l'alcool butylique tertiaire.

7. Procédé selon la revendication 5 ou 6, caractérisé en ce qu'on utilise de 0,5 à 2 parties en poids d'eau par partie en poids d'alcool.

8. Procédé selon la revendication 5, 6 ou 7, caractérisé en ce qu'on utilise de 0,5 à 2 parties en poids total d'alcool et d'eau par partie en poids d'acide carboxylique aliphatique.

9. Procédé selon l'une quelconque des revendications 5 à 8, caractérisé en ce qu'on applique l'acide carboxylique aliphatique sur les particules de charge à raison d'une quantité allant de 0,25 à 3,0% en poids de la charge.

7

10. Procédé selon l'une quelconque des revendications 5 à 9, caractérisé en ce qu'on ajoute de l'eau aux particules de charge, puis on ajoute l'acide carboxylique aliphatique mélangé à l'alcool.

11. Procédé selon l'une quelconque des revendications 5 à 10, caractérisé en ce que, après l'application de l'acide carboxylique aliphatique sur les particules de charge, on élimine l'excès d'eau et d'alcool par évaporation.

12. Procédé selon l'une quelconque des revendications 6 à 11, caractérisé en ce que les particules de charge sont celles définies à la revendication 2 ou 3.

13. Procédé selon l'une quelconque des revendications 6 à 12, caractérisé en ce que ledit acide est l'acide n-octanoïque.

14. Composition de polymère comprenant une matrice constituée d'un polymère organique dans laquelle est répartie une charge particulaire selon l'une quelconque des revendications 1 à 4, ou une charge particulaire préparée par un procédé selon l'une quelconque des revendications 5 à 13.

15. Composition de polymère selon la revendication 14, caractérisée en ce que la matrice comprend une résine de polyester insaturée ou du polychlorure de vinyle.

16. Composition de polymère selon la revendication 14 ou 15, caractérisée en ce que de 5 à 300 parties en poids de charge sont présentes pour 100 parties en poids du polymère formant la matrice.